# EUROPÄISCHE PATENTSCHRIFT

(11) **EP 0 475 107 B1**
(45) Veröffentlichungstag und Bekanntmachung des Hinweises auf die Patenterteilung: **15.02.1995**
(21) Anmeldenummer: 91113712.3
(22) Anmeldetag: 16.08.1991
(51) Int. Cl.: C08K 5/15, C08L 37/00, C08G 65/16

(54) **Verwendung von 2-(2'-Propenyl)-3,4-dihydro-2H-pyranen**
Use of 2-(2'-propenyl)-3,4-dihydro-2H-pyranes
L'utilisation de 2-(2'-propényl)-3,4-dihydro-2H-pyranes

(30) Priorität: 30.08.1990 DE 4042353
(43) Veröffentlichungstag der Anmeldung: 18.03.1992
(73) Patentinhaber: Th. Goldschmidt AG, 45127 Essen (DE)
(72) Erfinder: Schaefer, Dietmar, Dr., W-4320 Hattingen 16 (DE); Weier, Andreas, Dr., W-4300 Essen 1 (DE); Weitemeyer, Christian, Dr., W-4300 Essen 1 (DE); Wewers, Dietmar, Dr., W-4250 Bottrop (DE)

(56) Entgegenhaltungen:
- DE-B- 1 445 315
- TETRAHEDRON LETTERS, Band 27, Nr. 45, 1986, Pergamon Press, Oxford, New York; HIDEO I. et al.: "Carbonyl addition reaction by means of beta-silylphosphorous ylide. Anti-diastereoselective vinylation of alpha-alkoxy aldehydes", Seiten 6373-6376
- FARBE UND LACKE, 93. Jahrgang, Januar 1987, Vincentz Verlag, Hannover; J.V.CRIVELLO: "Geschwindigkeitsbestimmende Faktoren bei der kationischen UV-Haertung", Seiten 803-807

## Beschreibung

Die Erfindung betrifft die Verwendung von 2-(2'-Propenyl)-3,4-dihydro-2H-pyranen als kationisch härtbare Vergußmassen oder Beschichtungsmittel für flächige Träger oder als reaktive Modifizierungs- oder Verdünnungsmittel für kationisch härtbare Monomere oder Polymerisate.

Neben den bei UV-Einwirkung härtenden radikalisch polymerisierenden Systemen sind in den letzten Jahren kationisch härtbare, Vinylverbindungen enthaltende Systeme entwickelt worden, bei denen die Härtung insbesondere durch Diaryliodonium- und Triarylsulfoniumsalze initiiert wird. Der Vorteil der kationisch härtenden Systeme liegt in der Unempfindlichkeit der Härtungsreaktion gegen Luftsauerstoff, die rasche Filmbildung und die Umweltfreundlichkeit dieser Systeme.

Die kationische Härtung von Vinylmonomeren ist in den US-Patentschriften 4 617 238, 4 518 788 und 4 705 887 beschrieben.

Dabei haben die UV-härtbaren Vinyletherverbindungen aufgrund ihrer schnellen Härtbarkeit, der wirtschaftlichen Verarbeitbarkeit und ihrer Umweltfreundlichkeit besondere Beachtung gefunden. Derartige Vinyletherverbindungen lassen sich auf verschiedene Weise herstellen. In einem Übersichtsreferat über "Geschwindigkeitsbestimmende Faktoren bei der kationischen UV-Härtung" in der Zeitschrift Farbe und Lack, 1987, Seiten 803 bis 807, werden folgende Synthesemöglichkeiten angegeben:
1. Basenkatalysierte Acetylenaddition an Diole nach Reppe 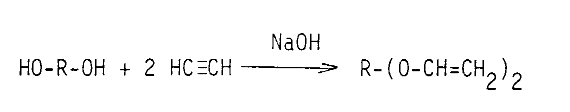
2. Phasentransferkatalysierte Kondensation von 2-Chlorethylvinylether und Diolen 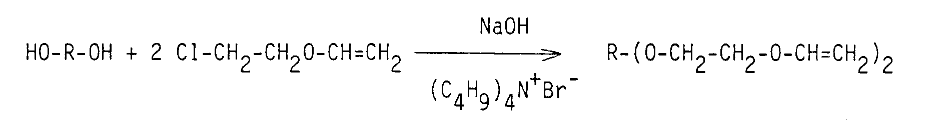
3. Katalysierte Umlagerung der Bis-allylether in die entsprechenden Bis-methylvinylether 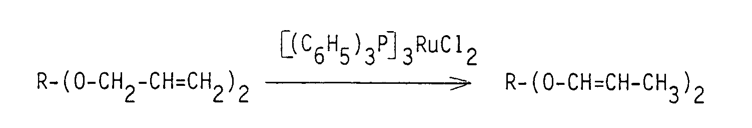
Die Addition nach Reppe ist unter wirtschaftlichen Gesichtspunkten nicht realisierbar. Bei der zweiten Reaktion benötigt man 2-Chlorethylether, dessen Einsatz aus physiologischen Gründen unerwünscht ist.

Den Vinylethern ist der Nachteil gemeinsam, daß in Gegenwart von Feuchtigkeit und Spuren Säure eine Aufspaltung der Enol-Ether in niedrigsiedende, geruchsintensive Carbonylverbindungen erfolgt: 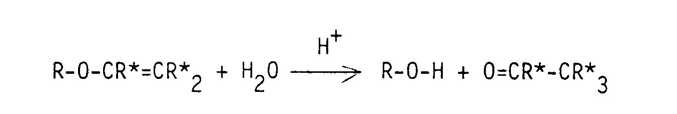
R* = H- oder Alkylrest
Die vorliegende Erfindung befaßt sich mit dem technischen Problem der Verwendung kationisch härtbarer Verbindungen, die selbst oder als reaktive Modifizierungs- oder Verdünnungsmittel für kationisch härtbare Monomere oder Polymerisate eingesetzt werden können, und unter vergleichbaren Bedingungen keine niedrigsiedenden, geruchsintensiven Carbonylverbindungen freisetzen.

Die erfindungsgemäß zu verwendenden Verbindungen sind 2-(2'-Propenyl)-3,4-dihydro-2H-pyrane der allgemeinen Formel 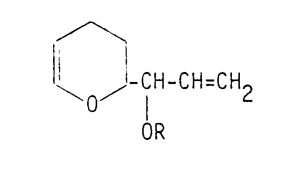
wobei R ein Wasserstoff- oder Alkylrest mit 1 bis 6 Kohlenstoffatomen ist.

Sie werden erfindungsgemäß verwendet als kationisch härtbare Vergußmassen oder Beschichtungsmittel für flächige Träger oder als reaktive Modifizierungs- oder Verdünnungsmittel für kationisch härtbare Monomere oder Polymerisate.

Beispiele geeigneter Alkylreste R sind der Methyl-, Ethyl-, Propyl-, iso-Propyl-, Butyl-, iso-Butylrest, Pentyl- und Hexylrest. Bevorzugt sind die geradkettigen Alkylreste, insbesondere der Ethyl- und der Propylrest.

Besonders bevorzugt zu verwendende Verbindungen sind die nachstehend aufgeführten Verbindungen: 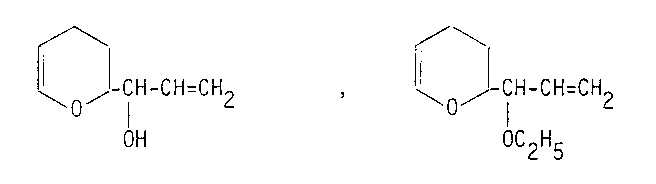
Die erfindungsgemäß zu verwendenden Verbindungen können in hier nicht beanspruchter Weise dadurch hergestellt werden, daß man entweder
a) 2-Formyldihydropyran mit Vinylmagnesiumhalogenid im Molverhältnis 1 : 0,8 bis 1 : 1,3 in Gegenwart eines Ethers oder Ether/Alkan-Gemisches als Lösungsmittel innerhalb eines Temperaturbereiches von -80 bis +80°C umsetzt, oder
b) 2-Formyldihydropyran mit Vinyllithium im Molverhältnis 1 : 1 bis 1 : 1,3 in Gegenwart eines Ethers oder Ether/Alkan-Gemisches als Lösungsmittel innerhalb eines Temperaturbereiches von -80 bis +70°C umsetzt, und
c) das nach a) oder b) erhaltene Reaktionsprodukt hydrolysiert und anschließend, falls R ein Alkylrest ist, in an sich bekannter Weise mit einem Halogenid der Formel RX (X = Halogen) verethert.

Das Verfahren a) verläuft als Grignard-Reaktion in an sich bekannter Weise. Als Lösungsmittel können die hierfür bekannten Lösungsmittel verwendet werden. Dies sind in erster Linie Ether, wie Tetrahydrofuran oder Diethylether oder die Gemische dieser Ether mit Alkanen, wie Hexan. Der bevorzugte Temperaturbereich liegt bei 30 bis 70°C. Zur Hydrolyse empfiehlt es sich, das Reaktionsgemisch in Eiswasser einzugießen. Das Reaktionsgemisch wird als ölige Phase vom Wasser abgetrennt und kann dann in üblicher Weise, z.B. durch Destillation, gereinigt werden.

Das Verfahren b) läuft ebenfalls in Gegenwart von Ethern oder Ether/Alkan-Gemischen als Lösungsmittel ab. Der bevorzugte Temperaturbereich ist -80 bis +20°C.

Die Veretherung in Schritt c) erfolgt in ebenfalls bekannter Weise durch Umsetzung der Reaktionsprodukte mit Alkylhalogeniden bei etwa 20 bis 100°C.

Die erfindungsgemäß zu verwendenden Verbindungen sind niedrigviskose, wasserklare Flüssigkeiten.

Die Aushärtung der erfindungsgemäß zu verwendenden Verbindungen erfolgt vorzugsweise durch UV-Strahlen in Gegenwart von Katalysatoren, wie salzartigen Diaryliodonium- oder Triarylsulfoniumverbindungen oder nicht-salzartigen Verbindungen, wie Ketosulfonen. Beispiele solcher Härter sind 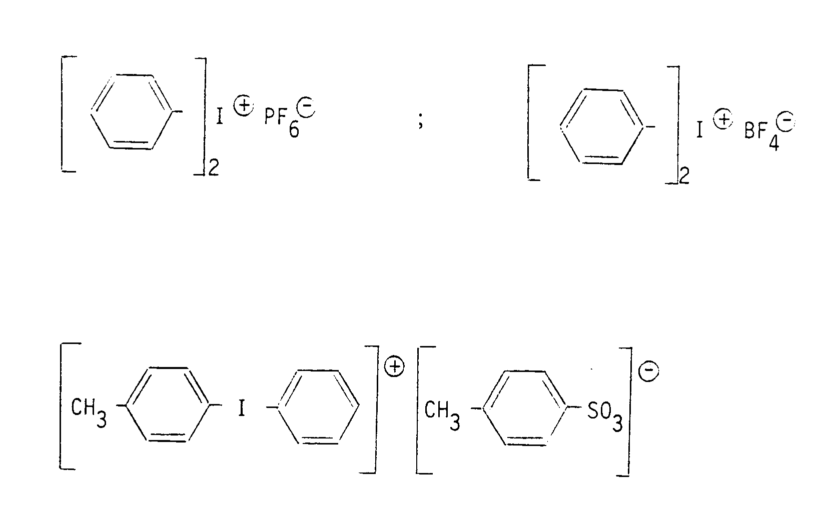 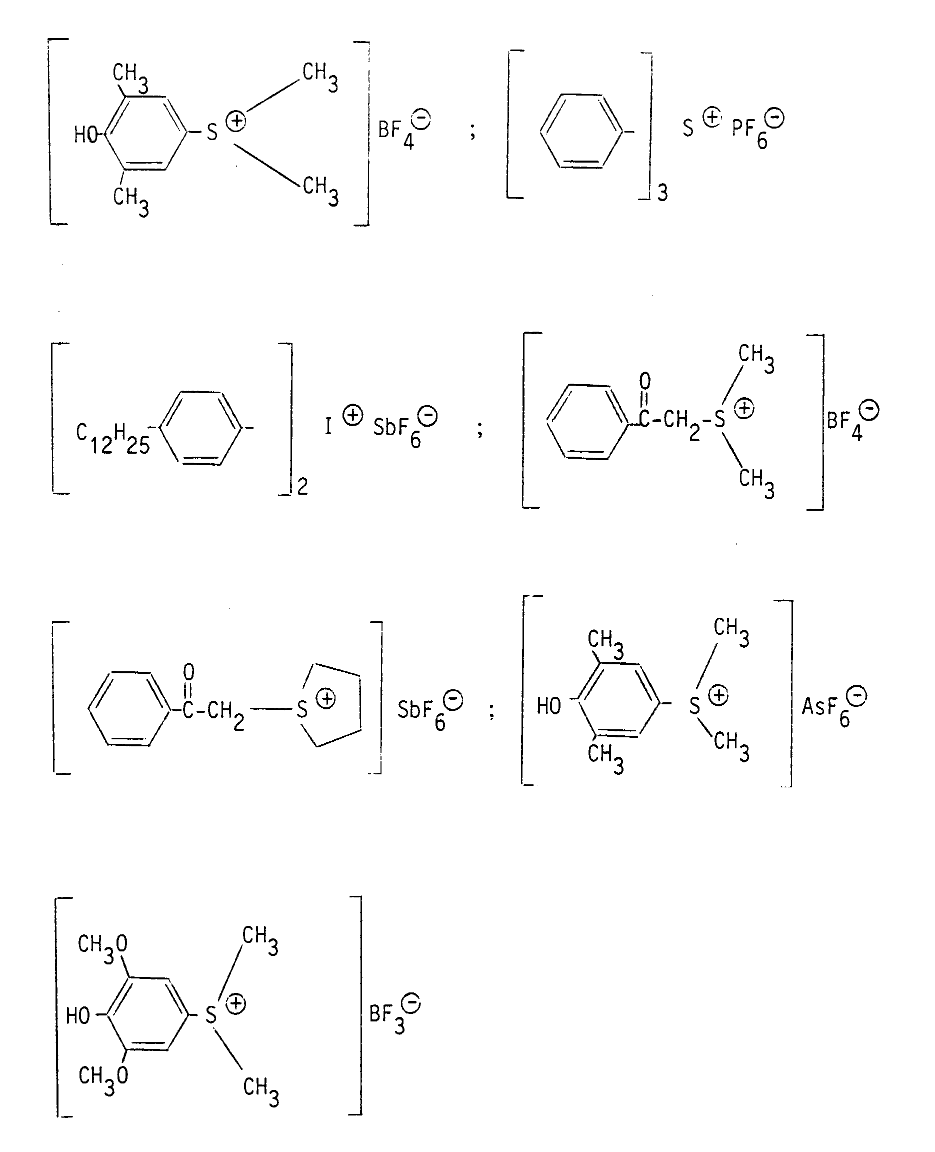
Besonders bevorzugte Initiatoren sind: 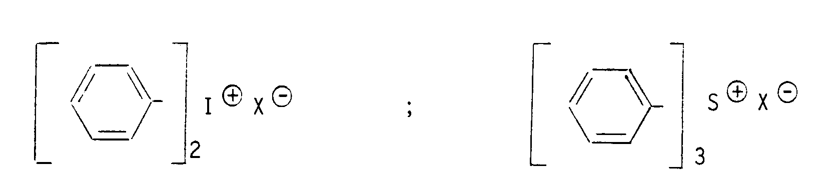
X^{⊖} = PF₆^{⊖} ; BF₄^{⊖} ; SbF₆^{⊖} 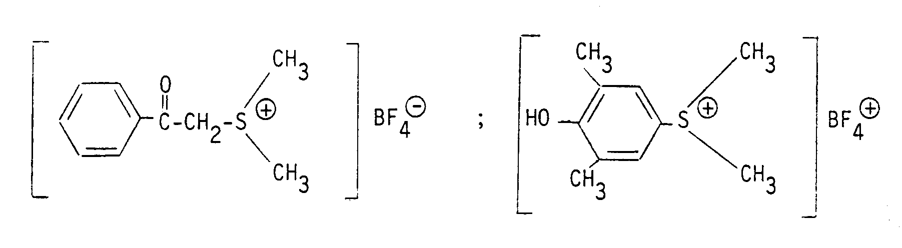
Des weiteren ist eine Hitzehärtung unter Verwendung von Oniumsalzen mit organischen Oxidationsmitteln oder löslichen Kupfersalzen oder Chelaten möglich, wie sie z. B. in der US-PS 4 173 551 beschrieben ist. Eine andere Möglichkeit, die Härtung herbeizuführen, besteht in der Verwendung von Verbindungen, die bei Temperaturerhöhung Säuren oder Lewissäuren freisetzen, wie Sulfonsäuresalze, besonders Aminsalze, Sulfonsäureester und Aminkomplexe von Lewissäuren, wie z.B. der Borsäuretrifluoridtriethylaminkomplex.

Die Härter werden den erfindungsgemäß zu verwendenden Verbindungen in Mengen von etwa 0,1 bis 5 Gew.-% zugesetzt.

Die Verbindungen können mit üblichen Zusatzmitteln, wie Füllstoffen, Pigmenten, Flammschutzmitteln und dergleichen vermischt werden.

Die härtbaren Verbindungen oder deren Zubereitungen können auf Substrate wie Metall, Gummi, Kunststoff, Papier, Holz, Glasgewebe, Zement, Keramik aufgebracht werden.

Die erfindungsgemäß zu verwendenden Verbindungen können Polymerisaten zugemischt werden, die entweder selbst kationisch härtbar sind oder die reaktive Gruppen aufweisen, die mit der endständigen Doppelbindung der erfindungsgemäßen Verbindungen reagieren können. Beispiele solcher Polymerisate sind Propenylpolyether, Vinylpolyetherpolysiloxane, Epoxygruppen enthaltende kohlenstofforganische oder siliciumorganische Verbindungen, Styrol, Wasserstoffsiloxane (bei Anwesenheit von Übergangsmetallkatalysatoren).

In den folgenden Beispielen werden die nicht beanspruchte Herstellung der erfindungsgemäß zu verwendenden Verbindungen und deren anwendungstechnische Eigenschaften noch näher und erläuternd gezeigt.

### Beispiel 1

Zu 800 ml einer 1molaren Lösung von Vinylmagnesiumbromid in THF werden 85,1 g (0,76 Mol) 2-Formyldihydropyran so zugetropft, daß die Reaktionslösung kontinuierlich siedet. Dann wird noch 12 h bei Raumtemperatur gerührt und etwa die Hälfte des Lösungsmittels bei 67 mbar abgezogen. Nach Eingießen der Reaktionslösung in 500 ml Eiswasser und Zugabe von 200 ml gesättigter Ammoniumchlorid-Lösung wird zweimal mit je 100 ml Hexan gewaschen und die organische Phase abgetrennt. Die vereinigten organischen Phasen werden über Magnesiumsulfat getrocknet, filtriert und destilliert. Man erhält 44,5 g (42 %) 2-(1'-Hydroxy-2'-propenyl )-3,4-dihydro-2H-pyran.

### Beispiel 2

Eine Suspension von 22,56 g (0,4 Mol) gepulvertem KOH in 100 ml Dimethylsulfoxid (DMSO) wird 5 min gerührt, dann werden schnell hintereinander 14,0 g (0,1 Mol) 2-(1'-Hydroxy-2'-propenyl)-3,4-dihydro-2H-pyran und 21,8 g (0,2 Mol) Ethylbromid zugegeben. Nach 30 min Rühren wird das Reaktionsgemisch in 500 ml Wasser gegossen und dreimal mit je 50 ml Diethylether extrahiert. Die vereinigten organischen Phasen werden fünfmal mit je 30 ml Wasser gewaschen, über Magnesiumsulfat getrocknet und destilliert. Man erhält 12,4 g (74 % der Theorie) 2-( 1'-Ethoxy-2'-propenyl )-3,4-dihydro-2H-pyran.

Zur Überprüfung der erfindungsgemäßen Verwendbarkeit der Dihydropyrane als reaktive Verdünner werden die Substanzen anderen kationisch härtenden Substanzen (einer Mischung von Bisphenol-A-diglycidether und Triethylenglycoldivinylether im Verhältnis 1 : 1, im folgenden "BTE" genannt) zugesetzt und nach Zugabe von 2 Gew.-% eines geeigneten Photoinitiators durch UV-Bestrahlung (Mitteldruck-Quecksilberdampflampe, 80 W/cm) in einem Aluminiumdeckel (Durchmesser 50 mm) gehärtet. Die Schichtdicke beträgt in jedem Fall etwa 3 mm.

| Substanz | Viskosität | Härtung | Oberfläche |
|---|---|---|---|
| BTE | 10 cp | 10 s | fest, schmierfrei, brüchig |
| BTE + 5 % Bsp. 1 | 7,8 cp | 9 - 10 s | fest, schmierfrei, unelastisch |
| BTE + 5 % Bsp. 2 | 8,2 cp | 10 s | fest, schmierfrei, elastisch |
| (1 cp = 1 mPa·s) | | | |

Die Substanzen härten nach UV-Bestrahlung, ohne durch Luftsauerstoff inhibiert zu werden.

Dabei sind besonders die Alkohole durch ihre relativ aciden Protonen befähigt, die Härtungsgeschwindigkeit zu erhöhen. Die Oberflächenbeschaffenheit ändert sich bei Zugabe der Dihydropyrane, so daß die ausgehärteten Substanzen weniger spröde sind.

## Patentansprüche

1. Verwendung von 2-(2'-Propenyl)-3,4-dihydro-2H-pyranen der Formel 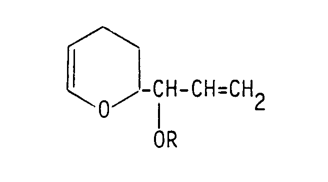 wobei R ein Wasserstoff- oder Alkylrest mit 1 bis 6 Kohlenstoffatomen ist, als kationisch härtbare Vergußmassen oder Beschichtungsmittel für flächige Träger oder als reaktive Modifizierungs- oder Verdünnungsmittel für kationisch härtbare Monomere oder Polymerisate.

## Claims

1. Use of 2-(2'-propenyl)-3,4-dihydro-2H-pyrans of the formula 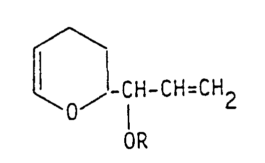 wherein R is a hydrogen radical or an alkyl radical having 1 to 6 carbon atoms, as cationically curable casting compositions or coating agents for flat carriers or as reactive modifying agents or diluents for cationically curable monomers or polymers.

## Revendications

1. Utilisation de 2-(2'-propényl)-3,4-dihydro-2H-pyrannes de formule 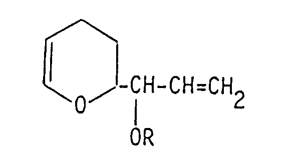 où R est un reste d'hydrogène ou un reste alkyle ayant de 1 à 6 atomes de carbone, comme des masses de scellement ou des agents de revêtement à durcissement cationique pour des supports disposés à plat ou comme des agents réactifs de modification ou de dilution pour des monomères ou des polymères à durcissement cationique.
